# DEMANDE DE BREVET EUROPEEN

(11) **EP 4 744 473 A1**
(43) Date de publication de la demande: **20.05.2026**
(21) Numéro de dépôt: 25213628.8
(22) Date de dépôt: 05.11.2025
(51) Int. Cl.: A01D 45/06, A01F 11/02, D01B 1/12, D01B 1/22

(54) **DISPOSITIF DE TRAITEMENT DE TIGES VEGETALES COMPORTANT DES CAPSULES DE GRAINES**

(30) Priorité: 15.11.2024 FR 2412510
(71) Demandeur: N.V. Depoortere, 8791 Beveren-Leie (BE)
(72) Inventeur: WOLFCARIUS, Nico, 8720 WAKKEN (BE); LESAGE, Claude, 9052 GENT (BE)
(74) Mandataire: Cabinet Beau de Loménie

(57) **Abrégé**

L'invention concerne un dispositif (2) de traitement de tiges végétales, comportant :
- un châssis (16),
- un moyen de déplacement pour déplacer les tiges sous forme de nappe continue,
- un moulin (1) s'étendant selon un axe longitudinal (A) entre une extrémité avant et une extrémité arrière, et
- un support fixe (100) disposé en regard du moulin.

L'extrémité avant (4) du moulin est positionnée en amont de l'extrémité arrière dans le sens de déplacement des tiges végétales, et l'extrémité avant du moulin est une extrémité libre. Le support fixe comprend une première portion (102) en regard de l'extrémité avant du moulin et une deuxième portion (104), qui est une extrémité libre, en regard de l'extrémité arrière du moulin.

## Description

### Domaine Technique

La présente invention concerne un dispositif pour le traitement de tiges végétales, notamment de lin, pouvant se présenter sous la forme d'andains et comportant des capsules contenant les graines. La présente invention concerne notamment l'étape de séparation des capsules, notamment éclatées, des tiges végétales sur lesquelles elles se trouvent.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

La dégradation biologique dépend des conditions d'humidité et d'ensoleillement auxquelles sont soumises les tiges. On comprend que ces conditions peuvent varier selon que la partie de tige est tournée vers le sol ou vers le ciel. C'est pourquoi on procède en cours de rouissage à une opération consistant à retourner l'andain sur le champ.

Cette opération dite de retournage est réalisée par un engin, automoteur ou tracté qui comporte des moyens de ramassage, aptes à prélever l'andain du sol sous forme d'une nappe continue, des moyens de retournage aptes à retourner sur elle-même ladite nappe ramassée et des moyens d'étalage aptes à étaler sur le sol la nappe ainsi retournée. Un tel engin est par exemple décrit dans le document FR.2.484.768.

Par ailleurs, au-delà des fibres contenues dans les tiges, le traitement du lin comprend également la récupération des graines de semence présentes sur les tiges. De telles graines sont présentes dans des coques, appelées capsules, présentes à l'extrémité apicale des tiges de lin. Les graines de semence sont récupérées seulement sur une petite partie de la production. La récupération des graines est effectuée quelques jours seulement après l'arrachage des tiges, lors d'une étape de retournage, lorsque les graines ont terminé leur maturation mais n'ont pas été encore ou trop dégradées par le rouissage.

Ainsi, durant l'opération de retournage, ou bien durant l'étape de récolte conduisant à l'étalage, sur le sol, des tiges végétales sous la forme d'andains, les capsules des tiges de lin peuvent traitées pour permettre la récupération des graines qui s'y trouvent, sans pour autant abîmer les tiges destinées à être teillées ultérieurement.

A cet effet, il est connu d'utiliser des engins automoteurs ou trainés, appelés écapsuleuses, permettant de récupérer les graines contenues dans les capsules. De telles écapsuleuses comportent généralement des moyens de ramassage permettant de récupérer les tiges de lin présentes sur le sol sous forme d'andain, puis des moyens de traitement desdites tiges de lin. Dans un premier temps, la partie haute, ou apicale, des tiges dans laquelle se trouvent les capsules, est éclatée et écrasée, par exemple en passant entre deux rouleaux écraseurs adjacents, de manière à obtenir un éclatement des capsules. Puis la partie apicale des tiges est battue, en passant dans un batteur, avant que les capsules éclatées et les graines restant encore sur les tiges ne soient séparées des tiges. Une fois les capsules et les graines séparées de tiges, celles-ci sont séparées entre elles pour ne récupérer que les graines, tandis que les tiges sont étalées sur le sol sous la forme d'andain.

La séparation des capsules éclatées et des tiges s'effectue à l'aide de rouleaux, ou moulins, disposés parallèlement au plan de la nappe de tiges, avec une extrémité avant située vers le milieu des tiges, et une extrémité arrière située au-delà de la partie apicale des tiges, de manière à repousser les capsules éclatées et les graines présentes à la surface des tiges, au-delà dudit bord de tiges, et provoquer leur chute par gravité vers des éléments de nettoyage. A cet effet, les rouleaux peuvent comprendre, à leur surface, des éléments de raclage destinés à racler la surface des tiges végétales, et sont mis en rotation autour de leur axe longitudinal, de telle sorte que leur surface vient se déplacer du centre des tiges vers ledit bord des tiges lorsqu'ils sont en contact avec les tiges.

Des dispositifs de séparation de capsules sont notamment décrits dans les documents FR 2 646 587, FR 2 562 916, FR 829 239 ou encore BE 424 702.

Cependant, les tiges végétales, et en particulier de lin, sont formées d'une multitude de faisceaux fibreux, souvent fins, qui peuvent venir s'accrocher sur les éléments tournants ou autres dispositifs de traitement des tiges végétales. En particulier, il est fréquent que des fibres de tiges végétales viennent s'enrouler autour des rouleaux en rotation, et en particulier autour des paliers de rotation via lesquels les rouleaux sont montés en rotation sur le dispositif de traitement, ce qui peut conduire à un enchevêtrement et donc à une usure ou, pire, à des blocages desdits rouleaux voire à des échauffements pouvant aller jusqu'à des départs de feu. De plus, il est également nécessaire d'entretenir régulièrement de tels rouleaux pour éviter l'accumulation de telles fibres autour d'eux, ce qui pourrait accélérer encore plus l'enroulement de nouvelles fibres et diminuer l'efficacité du balayage.

Enfin, en cas de blocage du rouleau par accumulation de fibres autour, le désenchevêtrement du rouleau est souvent rendu difficile par la quantité et la finesse des fibres qui y sont enroulées, et nécessite le plus souvent le démontage complet du rouleau, ce qui entraîne un arrêt supplémentaire du dispositif de traitement, souvent long, alors même que la période pour récupérer les graines de semence est très courte.

La demande FR 3 136 334 concerne également un dispositif de traitement de tiges végétales comportant des capsules de graines. L'invention concerne un dispositif de traitement de tiges végétales comportant des capsules de graines, notamment éclatées, et se déplaçant dans une première direction, sous forme d'une nappe continue s'étendant dans un plan. Le dispositif comporte un châssis et deux moulins, un moulin supérieur et un moulin inférieur, parallèles s'étendant selon un axe longitudinal entre une extrémité avant et une extrémité arrière, les moulins comprenant un corps comportant une surface périphérique. Au moins une portion des deux moulins s'étend sensiblement parallèlement au plan de la nappe continue, de part et d'autre de celle-ci, de manière à venir balayer la surface des tiges végétales de la nappe continue. L'extrémité avant des deux moulins est positionnée en amont de l'extrémité arrière dans le sens de déplacement de la nappe de tiges végétales, et l'extrémité avant est une extrémité libre.

Cependant, malgré la configuration et le montage des rouleaux d'un tel dispositif, des tiges sont parfois arrachées aux courroies de tenue et d'acheminement et sont alors acheminées avec les graines par un convoyeur disposé en-dessous des rouleaux, ce qui peut conduire à une accumulation au niveau du tambour inférieur, et donc provoquer des bourrages et des arrêts du dispositif.

### Exposé de l'invention

La présente invention vise à résoudre les différents problèmes techniques énoncés précédemment. En particulier, la présente invention vise à proposer un dispositif de traitement de tiges végétales comportant des capsules, qui diminue les forces exercées sur les tiges par rapport aux dispositifs de l'art antérieur, et qui facilite la circulation des tiges, notamment celles arrachées aux courroies. Plus précisément, la présente invention vise à proposer un dispositif de traitement de tiges végétales comportant des capsules, qui limite l'arrachement des tiges ainsi que les enroulements et l'accumulation des fibres, lors de la séparation des capsules et des tiges végétales.

Ainsi, selon un aspect, il est proposé un dispositif de traitement de tiges végétales comportant, sur une portion d'extrémité, des capsules de graines, notamment éclatées, et se déplaçant dans une première direction, sous forme d'une nappe continue s'étendant dans un plan avec un côté supérieur et un côté inférieur. Le dispositif comporte :
- un châssis,
- un moyen de déplacement configuré pour maintenir les tiges végétales par une portion de maintien distinctes de ladite portion d'extrémité, et pour les déplacer, sous forme de nappe continue, selon ladite première direction,
- un moulin s'étendant selon un axe longitudinal entre une extrémité avant et une extrémité arrière, et
- un support fixe, de préférence longitudinal, disposé en regard du moulin, de manière à ce que le moulin et le support fixe sont disposés de part et d'autre du plan de la nappe continue de tiges végétales, le moulin étant disposé d'un côté, de préférence du côté supérieur, du plan de la nappe continue et le support fixe de l'autre côté, de préférence du côté inférieur, du plan de la nappe continue.

L'axe longitudinal du moulin est incliné par rapport à la première direction, de manière à venir balayer ladite portion d'extrémité des tiges végétales de la nappe continue, l'extrémité avant du moulin est positionnée en amont de l'extrémité arrière dans le sens de déplacement de la nappe de tiges végétales, et l'extrémité avant du moulin est une extrémité libre.

Le support fixe comprend une première portion en regard de l'extrémité avant du moulin, une deuxième portion en regard de l'extrémité arrière du moulin et une partie principale s'étendant entre la première portion et la deuxième portion. La deuxième portion du support fixe est une extrémité libre.

Ainsi, le remplacement du moulin inférieur par un support fixe permet de réduire l'encombrement du dispositif de traitement, et donc de limiter les endroits au niveau desquels les tiges arrachées à la courroie d'entraînement, sont susceptibles de venir s'accumuler et créer un bourrage. Par ailleurs, grâce à une extrémité libre du moulin, les fibres des tiges végétales ne peuvent plus que très difficilement venir s'y enrouler et s'y enchevêtrer. En effet, l'absence de palier de rotation à l'extrémité avant du moulin, réduit les risques d'accrochage et d'accumulation de fibres des tiges végétales à cet endroit particulier. Au contraire, dans le dispositif selon la présente invention, le moulin est maintenu par son extrémité arrière, ce qui laisse l'extrémité avant totalement libre et ce qui permet de la réaliser ou la conformer de manière adéquate pour y limiter les points d'accroche des fibres de tiges végétales. Grâce à une telle extrémité avant libre, on limite donc les risques d'enroulement et d'enchevêtrement, et donc les risques d'endommagement, d'usure voire de blocage du moulin, ce qui réduirait la performance et la rentabilité du dispositif de traitement et pourrait même conduire à des risques d'incendie. De même, le support fixe est libre par la deuxième portion qui est celle rencontrée en premier par les graines et les tiges arrachées lors de leur transport après séparation par le dispositif de traitement. Là encore, l'absence de pallier de rotation permet de réduire les endroits au niveau desquels les tiges sont susceptibles de venir se bloquer lors de leur acheminement.

Enfin, le support fixe est immobile lors du balayage des tiges, contrairement au moulin au regard duquel il est positionné. L'absence de mouvement du support fixe limite également les risques d'enchevêtrement de tiges autour du support fixe, et donc d'accumulation.

Préférentiellement, l'extrémité avant du moulin est une extrémité arrondie, de préférence lisse, par exemple une extrémité convexe telle un cône, et la première portion du support fixe comprend une partie inclinée vers le bas.

L'extrémité avant du moulin est conçue de manière à limiter les points d'accroche et de manière à y faciliter le glissement des fibres. A cet effet, l'extrémité avant du moulin est choisie arrondie, et de préférence lisse, de manière à ne pas former d'obstacle à la circulation des fibres dessus, mais au contraire, de manière à permettre le glissement des fibres et leur entraînement par le reste de la nappe continue de tiges végétales circulant dans le dispositif de traitement.

De même, le support fixe peut comprendre une première portion en regard de l'extrémité avant du moulin qui présente une forme géométrique, vue de profil, sensiblement symétrique, par rapport au plan dans lequel se déplace la nappe continue, à celle de l'extrémité avant du moulin, c'est-à-dire inclinée vers le bas. De cette manière, la nappe continue est guidée, lorsqu'elle arrive entre le moulin et le support fixe, par l'extrémité avant du moulin et la deuxième portion du support fixe, vers l'intervalle formé entre le corps du moulin et la partie principale du support fixe.

Préférentiellement, le moulin est monté sur le châssis du dispositif de traitement par son extrémité arrière et le support fixe est monté sur le châssis du dispositif de traitement par la première portion.

Le moulin est ainsi toujours maintenu selon son axe longitudinal, mais uniquement du côté arrière, et non par les deux extrémités, de manière à garder l'extrémité avant libre. De plus, le maintien du moulin par son extrémité arrière permet un entraînement en rotation facilité et limitant, du côté arrière, les éventuels enchevêtrements ou accrochages de l'extrémité apicale des fibres de tiges végétales.

De même, le support fixe est maintenu du côté avant, et non par les deux extrémités, de manière à garder l'extrémité arrière libre. De plus, le maintien du support fixe par son extrémité avant permet de limiter, du côté arrière, les éventuels enchevêtrements ou accrochages des tiges végétales.

Préférentiellement, la partie principale du support fixe comprend au moins un élément longitudinal s'étendant selon un axe longitudinal parallèle à celui du moulin, l'axe longitudinal du moulin et l'axe longitudinal de la partie principale du support fixe s'étendant un plan vertical ou incliné entre 0° et 90° par rapport à un plan vertical, de préférence entre 10° et 60°, et plus préférentiellement entre 25° et 35°.

Ainsi, le support fixe présente une géométrie semblable à celle du moulin, avec une portion inclinée en regard de l'extrémité avant conique du moulin, et une partie principale qui s'étend longitudinalement parallèlement au corps du moulin. L'intervalle formé entre le corps du moulin et la partie principale du support fixe présente donc un écartement sensiblement constant le long de la direction longitudinale du corps du moulin ou de la partie principale du support fixe. De plus, le support fixe peut ne pas être positionné à la verticale de l'axe longitudinal du moulin. Le support fixe peut ainsi être positionné un peu plus en avant (en amont dans le sens de circulation des tiges) ou un peu plus en arrière (en aval dans le sens de circulation des tiges ou, dit autrement, entre le moulin et le moyen de déplacement), de préférence en arrière, mais toujours parallèle et à une même distance de l'axe longitudinal du moulin. Ainsi, le plan dans lequel s'étendent l'axe longitudinal du moulin et celui du support fixe peut être vertical, mais également incliné par rapport à la verticale. Le plan de la nappe continue vient alors se déformer pour passer sous le moulin, puis dans l'intervalle entre le support fixe et le moulin, ce qui permet de faciliter la chute des graines et des capsules éclatées.

Préférentiellement, la partie principale (du support fixe) comporte : une partie cylindrique supérieure, par exemple à base (ou section) ronde, triangle ou carrée, destinée à venir en contact avec la nappe continue, et un renfort longitudinal inférieur, par exemple une lame verticale, s'étendant le long de la partie cylindrique supérieure et solidaire de la partie cylindrique supérieure de manière à limiter l'enroulement de fibres autour du support fixe, et plus particulièrement autour de la partie cylindrique supérieure.

La partie principale peut avoir différentes formes, dont certaines peuvent favoriser le balayage des tiges tandis que d'autres peuvent faciliter la circulation des tiges en contact avec le support fixe. Ainsi, la partie principale peut présenter une partie supérieure destinée à venir en contact avec la nappe continue, et présentant une forme cylindrique à base ronde, triangulaire ou carrée.

Par ailleurs, afin de limiter le flambement de la partie supérieure cylindrique, la partie principale peut également comprendre un renfort inférieur s'étendant le long de la partie cylindrique supérieure, de préférence en-dessous, afin de la renforcer mécaniquement. Le renfort inférieur peut par exemple être une lame solidaire de la partie cylindrique supérieure et s'étendant par exemple verticalement ou dans le plan contenant l'axe longitudinal du moulin et du support fixe. En plus de renforcer mécaniquement la partie cylindrique supérieure, le renfort longitudinal permet également d'augmenter la dimension de la section transversale du support fixe, ce qui permet de réduire les risques d'enroulement de fibres autour du support fixe.

Préférentiellement, la partie principale du support fixe comporte plusieurs éléments longitudinaux, par exemple deux, trois ou quatre, disposés parallèles entre eux, et de préférence à l'axe longitudinal du moulin, ou bien disposés en segment circulaire avec une première portion commune.

Le support fixe n'est pas limité à une seule partie principale longitudinale, mais peut également comprendre, de part et d'autre d'une partie principale longitudinale parallèle à l'axe longitudinal du moulin, d'autres éléments s'étendant sensiblement parallèlement à la direction longitudinale. Ainsi, lors du passage de la nappe continue entre le support fixe et le moulin, les tiges vont passer entre différents intervalles successifs délimités par le moulin et chacun des éléments longitudinaux du support fixe.

Préférentiellement, le support fixe est monté sur le châssis via une liaison pivot verticale, ou inclinée entre la verticale et l'horizontale, éventuellement commandée, configurée pour modifier l'inclinaison horizontale, ou horizontale et verticale, de la partie principale du support fixe par rapport à la direction de déplacement de la nappe continue ou par rapport à l'axe longitudinal du moulin.

Le montage du support fixe sur le châssis via une liaison pivot permet de pouvoir facilement, par rotation autour de ladite liaison pivot, écarter la deuxième portion et la partie principale du support fixe, du moulin. En particulier, en cas d'accumulation de tiges dans l'intervalle entre le moulin et le support fixe, il est alors possible de retirer facilement l'amas de tige en faisant pivoter le support fixe, de manière à augmenter la taille de l'intervalle délimité par le moulin et le support fixe.

De plus, avec une liaison pivot inclinée, il est également possible d'orienter la partie principale du support fixe de manière inclinée par rapport au moulin, par exemple inclinée avec la deuxième portion vers le haut, derrière le moulin (en aval du moulin dans le sens de circulation des tiges ou, dit autrement, entre le moulin et le moyen de déplacement), de manière à imposer une courbure aux tiges végétales pendant le balayage, de préférence avec la partie apicale orientée vers le bas.

Préférentiellement, le moulin et le support fixe sont configurés pour incliner la nappe continue de tiges de manière à ce que la portion d'extrémité portant les capsules soit plus basse que la portion de maintien.

Le moulin et le support fixe s'étendent selon une direction longitudinale qui est inclinée par rapport à la direction de déplacement de la nappe continue. Ainsi, lors de l'acheminement des tiges dans le dispositif, le moulin et le support fixe vont venir en contact dans un premier temps avec une portion centrale des tiges végétales, puis avec la portion d'extrémité. Ainsi, lorsque le support fixe est positionné après le moulin (dans le sens de circulation des tiges végétales), les tiges végétales vont passer sous le moulin puis remonter pour venir passer entre le moulin et le support fixe. Comme les tiges végétales viennent en contact avec le moulin et le support fixe d'abord par leur portion centrale puis par leur portion d'extrémité, cela signifie que, au moment où la portion centrale passe entre le moulin et le support fixe, la portion d'extrémité passe sous le moulin, et donc est plus basse que la portion centrale. Une telle inclinaison des tiges végétales pendant le balayage permet d'améliorer, sous l'effet de la gravité, la séparation et la chute des graines et capsules éclatées présentent à la surface des tiges végétales.

Il est également possible d'envisager un support fixe s'étendant selon une direction longitudinale différente de celle du moulin, pour obtenir le même effet d'inclinaison des tiges, lors du balayage par le moulin.

Préférentiellement, la deuxième portion du support fixe est positionnée au-dessus d'un bord inférieur de l'extrémité arrière du moulin.

Un tel positionnement de la deuxième portion du support fixe par rapport au bord inférieur de l'extrémité arrière du moulin, permet de remonter les portions d'extrémité des tiges végétales avant ou après le balayage par le moulin, de préférence après, de manière à accentuer un tel balayage en combinant d'une part le mouvement des moyens de raclage du moulin et le mouvement des portions d'extrémité.

Préférentiellement, le moulin est monté sur le châssis via un moyen d'inclinaison configuré pour incliner l'axe longitudinal du moulin par rapport au plan de la nappe continue de tiges végétales, par exemple de manière à éloigner l'extrémité avant du moulin de la nappe continue ou à rapprocher l'extrémité avant du moulin de la nappe continue.

Préférentiellement, le dispositif de traitement comprend un moteur monté entre le châssis et le moulin afin de faire tourner le moulin sur lui-même, et la partie du moteur solidaire du moulin, en l'occurrence le rotor du moteur, est montée à l'intérieur du moulin, de préférence sensiblement au milieu du moulin et plus préférentiellement à proximité du centre de gravité du moulin.

Préférentiellement, le stator du moteur est monté à l'intérieur du moulin, de préférence sensiblement au milieu du moulin et plus préférentiellement à proximité du centre de gravité du moulin. En particulier, le moteur lui-même, c'est-à-dire le stator et le rotor, est monté à l'intérieur du moulin, de préférence sensiblement au milieu du moulin et plus préférentiellement à proximité du centre de gravité du moulin.

Le moulin est monté en rotation, notamment autour de son axe longitudinal, de manière à accentuer le balayage de la surface des tiges végétales. L'entraînement en rotation du moulin par rapport au dispositif de traitement est effectué via un moteur. En particulier, le moulin est solidaire du moteur d'entraînement par une portion située à l'intérieur du moulin, et idéalement à proximité du centre de gravité du moulin. Il est ainsi possible d'obtenir un entraînement stable et limitant les contraintes mécaniques au niveau de la liaison de solidarisation entre le moulin et son moteur d'entraînement. Une telle configuration permet d'obtenir un moulin plus robuste dans le temps, et moins sujet à des déformations.

Préférentiellement, le moulin comporte également des moyens de raclage montés sur la surface périphérique du corps, les moyens de raclage s'étendant sensiblement entre l'extrémité avant et l'extrémité arrière du moulin, par exemple selon une direction longitudinale ou selon une forme hélicoïdale, et comportant chacun une extrémité avant et une extrémité arrière.

Les moyens de raclage sont les éléments du moulin qui vont venir directement en contact avec les tiges végétales pour venir racler leur surface afin d'y séparer les capsules éclatées et les graines qui y sont présentes. Les moyens de raclage sont donc des éléments essentiels du dispositif de traitement, mais également des éléments amenés à s'user dans le temps.

Préférentiellement, les moyens de raclage sont montés de manière amovible sur la surface périphérique du corps du moulin, par exemple par serrage latéral, de préférence entre leurs extrémités avant et arrière, et/ou par maintien au niveau de leurs extrémités avant et arrières.

Les moyens de raclage sont ainsi prévus pour être démontés du moulin, notamment lorsqu'ils sont trop usés et qu'ils doivent être remplacés. Il est ainsi possible de ne changer qu'une partie du moulin, tout ou partie des moyens de raclage, et non le moulin intégralement, lorsque ce dernier est usé au bout d'une durée déterminée d'utilisation. En particulier, le reste du moulin peut être conservé à l'identique, notamment le corps, la liaison avec le moteur d'entraînement ou la première extrémité lisse, ce qui limite les coûts d'entretien du moulin et la pénibilité du travail d'entretien.

Préférentiellement, le moulin comporte un cône, de préférence lisse, monté sur l'extrémité avant du moulin, par exemple à l'extrémité avant du corps du moulin, et recouvrant, au moins partiellement, l'interface entre les moyens de raclage et la surface périphérique du corps du moulin au niveau de l'extrémité avant.

Le moulin peut comprendre une extrémité avant qui recouvre l'extrémité avant des moyens de raclage. Une telle configuration permet notamment d'éviter l'accroche des fibres de tiges végétales à l'interface entre les moyens de raclage et la surface du moulin. En particulier, l'extrémité avant de l'interface entre chaque moyen de raclage et le corps du moulin est recouverte par le cône d'extrémité avant du moulin. Le cône permet donc d'une part d'éviter l'accrochage ou l'enroulement des fibres sur le moulin, mais également sur les moyens de raclage. De plus, le cône permet également d'améliorer le montage mécanique de ces derniers sur le corps du moulin, notamment au niveau de l'extrémité avant du moulin.

Préférentiellement, le moulin est monté sur le châssis via un moyen de coulissement configuré pour permettre un éloignement vertical du moulin par rapport au plan de la nappe continue de tiges végétales.

Afin d'éviter les blocages ou éventuellement les pannes ou casses en cas d'accumulation de tiges végétales au niveau de l'entrée du dispositif de traitement, ou bien en cas de présence de corps étrangers tels que des pierres, le moulin est monté pivotant et/ou coulissant sur le châssis du dispositif de traitement, notamment verticalement, de manière à permettre au moulin de s'éloigner de la nappe continue de tiges végétales. Un tel pivotement et/ou coulissement peut justement permettre de laisser passer ledit corps étranger ou ledit amas sans créer de contrainte mécanique dans le dispositif de traitement, notamment au niveau de la liaison entre le moulin et le châssis. En particulier, le moulin étant monté sur le châssis uniquement par son extrémité arrière, il suffit juste de prévoir un mécanisme de pivotement et/ou coulissement entre celle-ci et le châssis, pour obtenir le pivotement et/ou le coulissement voulu du moulin
Préférentiellement, le moulin et/ou le support fixe est monté sur le châssis via un moyen d'écartement, éventuellement commandé, configuré pour modifier la distance entre le moulin et le support fixe par translation du moulin et/ou du support fixe, de préférence de manière à modifier l'espacement entre le moulin et le support fixe au niveau de la nappe continue.

Le moulin et le support fixe étant montés sur le châssis uniquement par une extrémité, il suffit juste de prévoir un mécanisme de translation entre celle-ci et le châssis, pour obtenir l'écartement voulu entre le moulin et le support fixe, tout en gardant le moulin et le support fixe parallèles entre eux. Une telle modification de l'écartement de moulin et du support fixe peut notamment être utilisée lorsque la nappe devient plus épaisse, par exemple en raison d'une accumulation plus rapide des tiges végétales au niveau des moyens de ramassage. L'augmentation de l'espacement entre le moulin et le support fixe peut alors permettre un meilleur raclage des surfaces de la nappe de tiges végétales, sans pour autant venir entraîner les tiges végétales en même temps que les capsules et les graines. Le moyen d'écartement est commandé, de manière à pouvoir choisir l'espacement entre le moulin et le support fixe.

Selon un autre aspect, il est également proposé un engin, automoteur ou tracté, comportant un système d'écapsulage comprenant un dispositif de traitement de tiges végétales tel que décrit précédemment, pour balayer la surface des tiges végétales comportant des capsules de graines, notamment éclatées.

Le dispositif de traitement peut donc être intégré au sein d'un engin agricole comportant notamment un système d'écapsulage.

Préférentiellement, l'engin comprend des moyens d'acheminement configurés pour acheminer, selon une première direction, les tiges végétales entre les différents dispositifs de traitement de l'engin, sous forme d'une nappe continue s'étendant dans un plan.

Préférentiellement, ledit dispositif de traitement est monté, dans ledit système d'écapsulage et dans le sens d'acheminement des graines, en aval d'un dispositif d'écrasement et d'éclatement des capsules de tiges végétales, et en amont d'un dispositif de séparation, de manière à successivement casser les capsules des tiges végétales, séparer lesdites capsules cassées des tiges végétales et isoler les graines du reste des capsules, lesdites opérations étant réalisées de manière continue pendant le déplacement de l'engin.

Le dispositif de traitement est positionné après les moyens d'écrasement et d'éclatement des capsules, afin de séparer les capsules éclatées et les graines d'une part, et les tiges végétales d'autre part.

Préférentiellement, l'engin comporte également des moyens de ramassage et des moyens d'étalage, dans lequel ledit dispositif de traitement est monté en aval des moyens de ramassage et en amont des moyens d'étalage, de manière à successivement ramasser les tiges végétales, par exemple au moins un andain, traiter les tiges végétales et étaler les tiges végétales, lesdites opérations étant réalisées de manière continue pendant le déplacement de l'engin.

Le système d'écapsulage peut être monté sur différents types d'engins agricoles, notamment des engins de retournage d'andain configurés pour ramasser, retourner et étaler les tiges végétales sous forme d'andain sur le sol. Dans ce cas, le système d'écapsulage peut être monté après ramassage, et éventuellement retournage, des tiges végétales, et avant l'étalage des tiges végétales, débarrassées de leurs capsules, sur le sol.

### Brève description des dessins

[Fig. 1] La figure 1 représente une vue en perspective d'un dispositif de traitement selon la présente invention ;
[Fig. 2] La figure 2 représente une vue en perspective d'un moulin pour un dispositif de traitement illustré à la figure 1 ;
[Fig. 3] La figure 3 représente une vue en coupe du moulin illustré à la figure 2 ;
[Fig. 4] La figure 4 représente une vue de côté d'un dispositif de traitement tel qu'illustré à la figure 1 ;
[Fig. 5] La figure 5 représente le dispositif de traitement de la figure 4, avec le moulin et le support fixe espacés l'un de l'autre verticalement ; et
[Fig. 6] La figure 6 représente, en partie et en vue de dessous, une partie d'un système d'écapsulage avec des dispositifs de traitement tels qu'illustrés aux figures 1, 4 et 5.

### Description des modes de réalisation

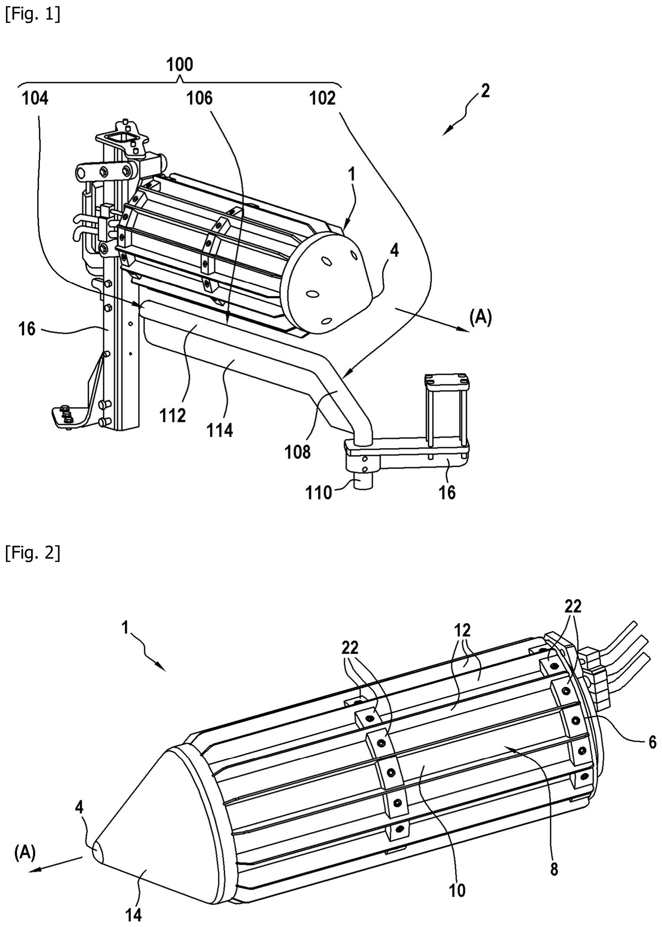

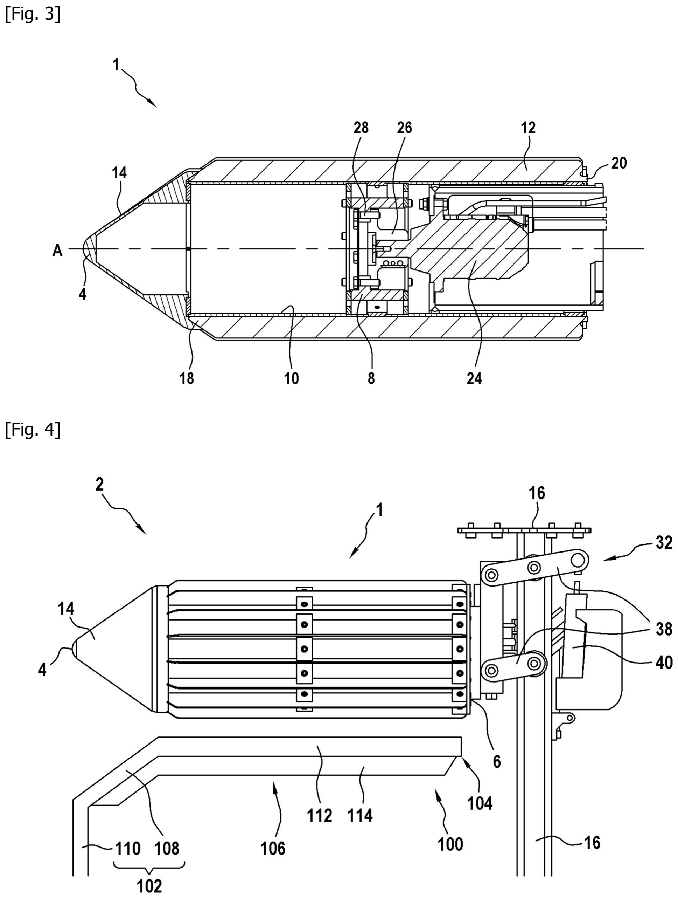

Les figures 1, 4 et 5 représentent, en perspective et de côté, des vues d'un dispositif de traitement 2 comportant un moulin 1 tel qu'illustré sur les figures 2 et 3, et un support fixe 100.

Le moulin 1 présente une forme générale longitudinale avec une extrémité avant 4 et une extrémité arrière 6, et s'étend autour d'un axe longitudinal A. Le moulin 1 comporte un corps 8, par exemple de forme générale cylindrique ou conique, avec une surface périphérique 10, ou paroi périphérique, et des moyens de raclage 12 montés sur la surface périphérique 10 du corps 8. Un cône 14 est prévu à l'extrémité avant 4 du moulin 1, tandis que l'extrémité arrière 6 est configurée pour permettre le montage du moulin 1 sur un châssis 16 (voir figures 1, 4 et 5).

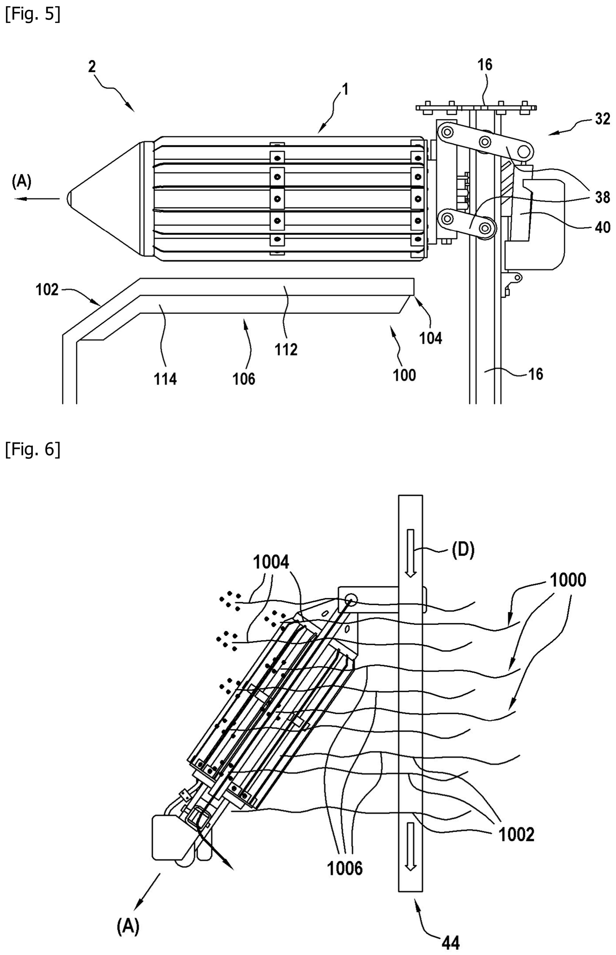

Le moulin 1 est destiné à séparer des capsules et des graines présentes à la surface d'une nappe continue de tiges végétales 1000. La nappe de tiges végétales, par exemple un andain ramassé par un dispositif de ramassage adapté, est acheminée selon une direction D (voir figure 6) le long de différents dispositifs permettant un traitement des tiges végétales, tel que : leur retournement et/ou leur écapsulage. En particulier, les tiges végétales 1000 sont orientées sensiblement perpendiculairement à la direction D. Les tiges végétales 1000 comportent une portion de maintien 1002 par laquelle elles sont tenues tout au long de leur acheminement le long des différents dispositifs, une portion d'extrémité (ou partie apicale) 1004 portant les graines et capsules éclatées, et une portion centrale 1006 située entre la portion de maintien 1002 et la portion d'extrémité 1004. Une fois les capsules éclatées, celles-ci sont séparées de la portion d'extrémité des tiges végétales sur lesquelles elles se trouvent, par un dispositif de traitement 2 comportant un moulin 1 et un support fixe 100. Le moulin 1 vient notamment balayer la surface de la nappe continue de tiges végétales avec les moyens de raclage 12, de manière à repousser les capsules et graines au-delà de la partie apicale des tiges végétales, et les faire tomber par gravité vers un autre dispositif, par exemple configuré pour séparer les capsules et les graines.

Les moyens de raclage 12 sont montés sur la surface périphérique 10 du corps 8 du moulin 1, et viennent former une partie de la surface périphérique du moulin 1. Les moyens de raclage 12 sont destinés à venir directement en contact avec les tiges végétales, dont ils balayent la surface, lorsque le moulin 1 tourne en rotation autour de son axe. Les moyens de raclage 12 s'étendent entre l'extrémité avant 4 à l'extrémité arrière 6 du moulin 1, et peuvent ainsi comporter une extrémité avant 18 disposée à proximité de l'extrémité avant 4 du moulin 1, et une extrémité arrière 20 disposée à proximité de l'extrémité arrière 6 du moulin 1. Les moyens de raclage 12 peuvent notamment s'étendre selon une direction longitudinale, parallèle à la direction longitudinale A du moulin 1 comme illustré sur les figures 2 et 3, ou bien peuvent s'étendre sous toute autre forme, par exemple hélicoïdale.

Les moyens de raclage 12 étant destinés à s'user lors de leur utilisation, par frottement sur les tiges végétales, ceux-ci sont montés de préférence de manière amovible sur le moulin 1. Il est alors possible de les remplacer ou de les réparer/rénover lorsqu'ils sont usés ou abîmés, sans avoir à changer l'intégralité du moulin 1. A cet effet, les moyens de raclage 12 peuvent être montés sur le corps 8 au niveau de leurs extrémités 18, 20 et/ou entre leurs extrémités 18, 20.

Par exemple, l'extrémité arrière 20 des moyens de raclage peut comprendre un ergot destiné à coopérer avec un logement correspondant prévu à l'extrémité arrière 6 du moulin 1. De même, l'extrémité avant 18 des moyens de raclage peut également être configurée pour coopérer avec l'extrémité avant 4 du moulin 1, et plus particulièrement avec le cône 14 monté à l'extrémité avant 4 du moulin 1. Ainsi, le cône 14 peut être prévu pour venir recouvrir l'extrémité avant 18 des moyens de raclage 12, et plus particulièrement l'interface entre l'extrémité avant 18 des moyens de raclage 12 et le corps 8. Le cône 14 permet ainsi d'empêcher l'accrochage de fibres végétales au niveau de cette interface.

L'extrémité avant 4, notamment le cône 14, et l'extrémité arrière 6 peuvent également être configurées pour positionner et pour maintenir les moyens de raclage 12 le long de la périphérie de la surface périphérique 10 du corps 8. Ainsi, le cône 14 et l'extrémité arrière 6 peuvent comporter des encoches de coopération avec les extrémités 18, 20 des moyens de raclage 12, de manière à empêcher tout déplacement, en particulier glissement, desdits moyens de raclage 12 autour de la surface périphérique 10 du corps 8, notamment lorsque le moulin 1 tourne autour de son axe longitudinal A et que les moyens de raclage 12 sont soumis à des forces transversales lors du contact avec les tiges végétales.

Par ailleurs, en plus des extrémités avant 18 et arrière 20, les moyens de raclage 12 peuvent également être maintenus sur la surface périphérique 10 du corps 8 entre leurs deux extrémités 18, 20. Par exemple, le moulin 1 peut comprendre des moyens de serrage tels des cales de serrage 22 venant se fixer directement sur la surface périphérique 10 du corps 8, entre les moyens de raclage 12, et venant pincer latéralement, de part et d'autre, les moyens de raclage 12. Les cales de serrage 22 concourent donc à maintenir en position et sur le corps 8, les moyens de raclage 12.

Le moulin 1 est ainsi prévu pour tourner en rotation autour dudit axe longitudinal A, ce dernier étant orienté dans un plan parallèle au plan de la nappe continue de tiges végétales comprenant la direction D d'acheminement des tiges végétales, lorsque le moulin 1 présente une forme générale cylindrique, mais avec un angle par rapport à la direction D d'acheminement des tiges végétales (voir figure 6). Dans le cas d'un moulin présentant une forme générale conique, l'axe longitudinal A pourra être incliné par rapport au plan de la nappe continue de tiges végétales, de manière à ce que le bord du moulin venant en contact avec les tiges végétales soit parallèle au plan de la nappe de tiges végétales. Dans les deux cas, une portion du moulin 1 s'étend sensiblement parallèlement au plan de la nappe continue, à savoir la portion du moulin 1 la plus proche de la nappe continue.

L'angle entre la direction longitudinale A et la direction D est notamment prévu pour que l'extrémité avant 4 du moulin se situe à proximité du milieu des tiges végétales, et pour que l'extrémité arrière 6 du moulin se situe à proximité ou au-delà de la partie apicale 1004 des tiges végétales, par exemple dans la portion centrale 1006. De cette manière, les capsules et graines balayées par les moyens de raclage 12 sont déplacées du milieu vers la partie apicale des tiges végétales 1000 au fur et à mesure que les tiges végétales se déplacent de l'extrémité avant 4 vers l'extrémité arrière 6 du moulin 1.

Le dispositif de traitement 2 comprend également le support fixe 100 positionné en regard du moulin 1, de manière à ce que la nappe continue de tiges végétales 1000 vienne circuler entre le moulin 1 et le support fixe 100. Comme représenté sur la figure 1, le moulin 1 est positionné du côté supérieur de la nappe continue, et le support fixe 100 du côté inférieur.

Le support fixe 100 comprend une première portion 102, positionnée sensiblement en regard du cône 14 du moulin 1, une deuxième portion 104, libre, positionnée sensiblement en regard de l'extrémité arrière 6 du moulin 1, et une partie principale 106 située entre la première portion 102 et la deuxième portion 104.

La première portion 102 peut comprendre une partie inclinée 108 et une liaison pivot 110 par laquelle le support fixe 100 est monté sur le châssis 16. La liaison pivot 110 peut être par exemple verticale, de manière à permettre une rotation du support fixe 100 dans un plan horizontal parallèle à la direction longitudinale A. En particulier, la rotation du support fixe 100 autour de la liaison pivot 110 permet notamment d'éloigner la deuxième portion 104 du moulin 1, et donc d'enlever d'éventuelles tiges qui auraient pu s'amasser entre le support fixe 100 et le moulin 1, de laisser passer des corps étrangers, tels que des pierres, qui auraient été entraînés avec les tiges végétales dans la nappe continue. Une telle action est d'autant plus facilitée que la deuxième portion 104 est une extrémité libre par laquelle d'éventuelles fibres enchevêtrées autour du support fixe 100 peuvent être enlevées par coulissement autour de la partie principale 106 jusqu'à ladite extrémité libre ou, le plus souvent, automatiquement par glissement jusqu'à ladite extrémité libre sous l'effet du passage de la nappe de tiges.

La partie inclinée 108, qui relie la liaison pivot 110 à la partie principale 106, peut présenter une inclinaison sensiblement symétrique à celle du cône 14 par rapport au plan de la nappe continue. La combinaison du cône 14 et de la partie inclinée 108, qui sont les parties du dispositif 1 qui viennent en premier en contact avec les tiges transportées par le convoyeur, permet de guider lesdites tiges vers l'interstice formé par le moulin 1 et la partie principale 106 du support fixe 100.

La deuxième portion 104 du support fixe 100 est positionnée sensiblement en regard de l'extrémité arrière 6 du moulin 1, et est une extrémité libre. Les tiges traitées par le moulin 1 peuvent alors continuer d'être acheminées par le convoyeur en circulant plus librement au niveau de la deuxième portion 104 libre du support fixe 100. Il est ainsi possible de limiter les blocage ou enchevêtrements au niveau du support fixe 100.

La partie principale 106 est positionnée entre la première portion 102 et la deuxième portion 104, et vient former la partie inférieure de l'interstice dans lequel sont traitées les tiges végétales. La partie principale 106 présente ainsi avantageusement une partie supérieure cylindrique 112 ou au moins hémicylindrique, afin de faciliter la circulation des tiges végétales sur la partie principale, et limiter les blocages. La partie supérieure cylindrique 112 ou au moins hémicylindrique peut être à base ronde, triangulaire ou carrée.

Avantageusement, et comme illustré sur les figures, le support fixe 100 peut comprendre un élément cylindrique longitudinal incliné formant, au moins en partie, la liaison pivot 110, la première portion 102, la partie principale 106 et la deuxième portion 104.

La partie principale 106 peut également comprendre un renfort longitudinal 114, de préférence une lame s'étendant sensiblement perpendiculairement au plan de la nappe continue de tiges végétales, et montées solidairement sur la partie principale 106, et éventuellement les première et deuxième portions 102, 104, à l'opposé du moulin 1. Le renfort longitudinal 114 permet de renforcer la résistance mécanique du support fixe 100 contre le flambement, mais également d'augmenter la dimension du support fixe dans un plan perpendiculaire à la première direction D. Il permet donc aussi de limiter l'enroulement de fibres autour de l'élément cylindrique longitudinal.

Selon une variante non-représentée, le moulin et le support fixe peuvent être configurés pour incliner la nappe continue de tiges de manière à ce que la portion d'extrémité portant les capsules soit plus basse que la portion de maintien.

Ainsi, dans l'exemple illustré sur les figures, le support fixe 100 est positionné au droit du moulin 1, l'axe (A) du moulin 1 et la direction longitudinale de la partie principale 106 du support fixe 100 s'étendant dans un même plan vertical.

Cependant, le support fixe 100 peut être positionné à la même distance de l'axe (A) du moulin 1, mais en amont ou en aval du moulin 1, dans le sens de déplacement des tiges végétales. Dans ce cas, la partie principale 106 du support fixe 100 est positionnée au-dessus d'un bord inférieur du moulin 1. En particulier, lorsque le support fixe 100 est positionné en aval du moulin 1 (c'est-à-dire entre le moulin 1 et le moyen de déplacement 44), la portion centrale 1006 des tiges végétales, qui est la portion des tiges végétales à passer en premier entre le moulin 1 et le support fixe 100, vient être relevée par le support fixe 100 alors que la portion d'extrémité 1004 est encore en train de passer sous les moyens de raclage du moulin 1, c'est-à-dire que la portion d'extrémité se retrouve penchée vers le bas, sous l'effet de la flexion de la tige végétale, pendant que les moyens de raclage balaient la portion d'extrémité 1004. Il est ainsi plus facile de séparer et faire tomber les graines et les capsules éclatées, en profitant de la gravité qui vient agir dans le même sens que le dispositif 1.

Par exemple, l'axe longitudinal du moulin et l'axe longitudinal de la deuxième portion du support fixe peuvent s'étendre un plan incliné entre 0° (plan vertical tel qu'illustré sur les figures) et 90° par rapport à un plan vertical, de préférence entre 10° et 60°, et plus préférentiellement entre 25° et 35°.

Alternativement, ou en complément, la deuxième portion 104 du support fixe peut être positionnée au-dessus d'un bord inférieur de l'extrémité arrière du moulin, de préférence en aval du moulin 1, c'est-à-dire entre le moulin 1 et le moyen de déplacement 44.

Par exemple, la liaison pivot 110 peut être inclinée par rapport à la verticale, de manière à permettre une inclinaison de l'élément longitudinal du support fixe par rapport à l'horizontale, par rotation de ladite liaison pivot. Dans ce cas, la direction longitudinale de la partie principale du support fixe n'est plus toujours parallèle à l'axe (A) du moulin 1, et, selon l'angle de rotation du support fixe dans la liaison pivot, la deuxième portion du support fixe peut changer de hauteur et venir plus ou moins s'éloigner des moyens de raclage du moulin. Il est notamment possible, en inclinant la partie principale du support fixe vers l'arrière du moulin, avec une deuxième portion positionnée au-dessus de la première portion, d'amplifier la courbure des tiges lors du balayage, avec une portion d'extrémité 1004 encore plus orientée vers le bas.

Dans l'exemple illustré sur les figures, le support fixe 100 comprend une seule partie principale 106 s'étendant depuis la liaison pivot 110 jusqu'à une deuxième portion 104 libre. Cependant, le support fixe peut comprendre également d'autres parties principales s'étendant depuis la même liaison pivot 110, et jusqu'à des deuxièmes portions libres différentes. Par exemple, le support fixe peut comprendre trois, quatre ou cinq parties principales disposées en parallèle ou en éventail depuis une même liaison pivot jusqu' à des deuxièmes portions distinctes. Dans ce cas, chaque partie principale du support fixe peut coopérer avec le moulin pour permettre un balayage de la portion d'extrémité des tiges, et donc avoir, avec un seul moulin, plusieurs balayages successifs réalisés sur une même nappe continue de tiges végétales.

Les tiges végétales sont acheminées en direction de l'extrémité avant 4 du moulin 1. Or, les tiges végétales, notamment celles de lin, comprennent une multitude de fibres, parfois très fines, dont certaines sont susceptibles de venir s'enrouler autour de n'importe quel obstacle se présentant le long de leur parcours. Afin de limiter l'accumulation et l'enchevêtrement de telles fibres dans le dispositif de traitement 2, et plus particulièrement autour des moulins 1, ceux-ci comportent une extrémité avant 4 qui est libre, en particulier qui est dépourvue de moyen de rotation tel qu'un palier. Dit autrement, le moulin 1 est monté, sur le châssis 16, en porte-à-faux au-dessus ou en-dessous de la nappe continue de tiges végétales. L'extrémité avant libre des moulins 1 permet ainsi de limiter l'accrochage de fibres végétales susceptibles de venir s'y emmêler, comme c'est souvent le cas lorsque les moulins sont montés entre deux paliers.

Afin de limiter encore plus l'accroche de fibres, le moulin 1 comprend une extrémité avant 4 lisse, facilitant le glissement des fibres de dessus. La forme de l'extrémité avant 4 est également configurée pour y faciliter le glissement des fibres. Ainsi, l'extrémité avant 4 du moulin 1 est choisie de forme arrondie, et de préférence de forme convexe afin de guider les fibres au-delà de l'extrémité avant 4 du moulin 1. Par exemple, le moulin 1 est prévu avec le cône 14 monté sur l'extrémité avant 4. Le cône 14 permet de guider les fibres jusqu'aux moyens de raclage 12, tout en limitant les risques d'accrochage ou d'enchevêtrement.

Comme indiqué précédemment, le cône 14 peut venir recouvrir l'extrémité avant 18 des moyens de raclage 12, et donc l'interface entre les moyens de raclage 12 et le corps 8. Le cône 14 forme donc un chapeau recouvrant complètement l'extrémité avant du corps 8 et venant guider les fibres végétales directement sur les moyens de raclage 12. Le cône 14 permet à la fois de limiter l'enchevêtrement des fibres sur l'extrémité avant du moulin 1 et de maintenir l'extrémité avant 18 des moyens de raclage 12.

Avantageusement, le cône 14 peut être monté amovible sur le corps 8. Un tel montage amovible du cône 14 peut notamment faciliter le changement des moyens de raclage 12, en permettant leur retrait et insertion par l'avant du moulin 1. Par ailleurs, et comme cela sera décrit plus bas, un tel cône 14 amovible peut également faciliter le montage et le retrait du moulin 1 sur le châssis, notamment lorsque la liaison est prévue à l'intérieur du corps 8, comme décrit ci-dessous. Dans ce cas, le retrait du cône 14 permet d'accéder facilement à l'intérieur du corps 8 pour y effectuer les opérations de montage/démontage du moulin 1 sur le châssis 16.

Le moulin 1 est ainsi, dans le cas illustré sur les figures, monté par son extrémité arrière 6. En particulier, et comme visible sur la figure 2, le corps 8 présente une extrémité arrière ouverte permettant de glisser le corps 8 autour d'un élément du châssis 16 ou autour d'un élément monté sur le châssis 16. Un tel montage par l'extrémité arrière 6 du moulin 1 et par l'intérieur du moulin 1, permet, ici encore, de limiter les zones d'accroche sur lesquelles des fibres pourraient venir s'enrouler lors du balayage des capsules et des graines par le dispositif de traitement 2.

Sur la figure 3, le corps 8 est positionné autour d'un moteur 24 configuré pour mettre en rotation le moulin 1 par rapport au châssis 16. Plus précisément, le corps 8 vient se solidariser avec le rotor 26 du moteur 24, via des moyens de solidarisation 28, par exemple des vis. En particulier, le positionnement du moteur 24, notamment du stator du moteur 24, est choisi de manière à se trouver à proximité du milieu du moulin 1, et en particulier à proximité du centre de gravité du moulin 1, de manière à limiter les contraintes de torsion dues au poids du moulin 1, au niveau de la solidarisation entre le corps 8 et le moteur 24.

Comme indiqué précédemment, les moyens de solidarisation 28 sont accessibles directement après retrait du cône 14 : une fois celui-ci enlevé, les têtes de vis sont exposées, ce qui permet le montage du corps 8 sur le rotor 26 du moteur 24, ou au contraire le démontage du corps 8. On facilite ainsi les opérations de maintenance sur le moulin 1, notamment si on souhaite remplacer les moyens de raclage 12.

Les figures 4 et 5 représentent une vue de côté du dispositif de traitement 2. Le dispositif de traitement 2 comporte ainsi un moulin 1 et un support fixe 100 montés de part et d'autre de la nappe continue de tiges végétales, en particulier respectivement au-dessus et en-dessous de ladite nappe continue de tiges végétales.

Le moulin 1 et le support fixe 100 sont disposés sensiblement parallèlement entre eux, avec un espacement entre eux prévu pour la circulation de la nappe continue de tiges végétales. En venant ainsi balayer la surface supérieure de la nappe continue de tiges végétales, le moulin 1 empêche les capsules et les graines de passer entre lui et le support fixe 100, et les achemine vers une autre direction que les tiges végétales, par exemple vers un dispositif configuré pour séparer les graines des capsules.

Toutefois, lors de la séparation, des corps étrangers ou des amas peuvent se retrouver au sein de la nappe de tiges végétales, ce qui peut venir bloquer le moulin 1, voire endommager le moulin 1 et/ou le support fixe 100. Afin de limiter les risques de tels blocages ou d'endommagement, le moulin 1 est monté coulissant selon la direction verticale afin de permettre un éloignement de du moulin par rapport à la nappe continue.

Ainsi, dans l'exemple illustré aux figures 4 et 5, le moulin 1 est monté sur le châssis 16 via un moyen d'écartement 32. Toutefois, l'invention ne se limite pas à un tel mode de réalisation, et il est parfaitement envisageable de prévoir le moulin 1 avec un moyen d'inclinaison en lieu et place, ou en plus, du moyen d'écartement.

Le moyen d'écartement 32 est prévu entre le moteur 24 et le châssis 16. Le moteur 24 est monté sur le châssis 16 par une liaison glissière permettant un coulissement, notamment vertical, du moulin 1. Un tel coulissement permet donc de modifier la distance séparant le moulin 1 et le support fixe 100. Le moteur 24 est par exemple monté sur le châssis 16 via deux bielles 38 : une extrémité de chaque bielle 38 est reliée pivotante sur le châssis 16 et l'autre extrémité est montée pivotante sur le moteur 24, les liaisons pivot étant horizontales.

Ainsi, en fonctionnement normal, le moulin 1 est parallèle à la nappe de tiges végétales et permet de balayer la surface supérieure de celle-ci. Par contre, en cas de contrainte, notamment verticale, s'exerçant entre le moulin 1 et le support fixe 100, le moulin 1 va pouvoir se translater verticalement par rotation des deux bielles 38. Une fois l'origine de la contrainte disparue, et en raison de son propre poids, le moulin 1 va alors être amené à retourner dans sa position initiale, par rotation des deux bielles 38 dans l'autre sens. Le moyen d'écartement 32 offre donc un mouvement de liberté au moulin 1, en lui permettant un coulissement vers le haut lorsque les contraintes s'exerçant entre le moulin 1 et le support fixe 100 sont suffisantes pour surmonter le propre poids du moulin 1.

Alternativement, ou en complément, le moyen d'écartement 32 peut également être commandé, afin de permettre un contrôle direct de l'écartement entre le moulin 1 et le support fixe 100. Par exemple, le moyen d'écartement 32 peut comporter un piston 40 monté entre une extrémité d'une des bielles 38 et le châssis 16. L'actionnement du piston 40 permet alors de faire pivoter les deux bielles 38, et donc de faire coulisser le moulin 1 verticalement.

Afin de garder un coulissement libre du moulin 1 selon la direction verticale, malgré la présence du piston 40, le moyen d'écartement 32 peut comprendre une liaison glissière, avantageusement verticale, entre la bielle 38 et le piston 40. Une telle liaison glissière permet un mouvement libre de la bielle 38, et donc du moulin 1, par rapport au piston 40, notamment lorsque le moulin 1 est levé verticalement par un corps étranger ou un amas présent dans la nappe continue.

La figure 6 illustre, en partie, un système d'écapsulage comportant le dispositif de traitement 2 selon la présente invention. Plus particulièrement, le système d'écapsulage peut être intégré dans un système plus complexe, par exemple dans un engin de retournage d'andain et d'écapsulage.

Le système d'écapsulage comprend, dans le cas présent, une ligne configurée pour traiter une nappe continue de tiges végétales et comportant notamment le dispositif de traitement 2.

La ligne comporte des moyens d'acheminement 44 configurés pour acheminer la nappe de tiges végétales selon la première direction D, entre les différents dispositifs de traitement. Les moyens d'acheminement 44 peuvent se présenter sous forme de bandes souples mobiles entre lesquelles sont pincées les tiges végétales pour être entraînées entre les différents dispositifs de traitement.

Ainsi, le système d'écapsulage peut être monté en aval, dans le sens de déplacement de la nappe continue, d'un dispositif de retournage.

Le système d'écapsulage comprend, dans un premier temps, des moyens d'écrasement et d'éclatement des capsules des tiges végétales. Par exemple, le système d'écapsulage peut comprendre une fente fixe (non représentée) à travers laquelle les capsules sont passées de force, ainsi que des rouleaux dits écraseurs (non représentés) venant écraser les capsules pour laisser apparaître les graines qui y sont contenues. Par ailleurs, un dispositif d'éclatement, par exemple sous la forme d'un batteur, peut alors être prévu pour battre les tiges et les capsules écrasées de manière à faire éclater les capsules.

Le système d'écapsulage comporte alors le dispositif de traitement 2 tel que décrit précédemment, permettant de séparer les capsules et les graines, des tiges végétales de la nappe continue. Les tiges végétales continuent d'être acheminées par les moyens d'acheminement 44, par exemple jusqu'à des moyens d'étalement sur le sol sous forme d'andain.

De leur côté, les capsules et les graines sont acheminées vers un autre dispositif de séparation (non représenté) permettant de séparer les morceaux de capsules d'un côté et les graines de l'autre.

Ainsi, grâce au dispositif de traitement selon la présente invention, il devient possible de séparer les capsules et les graines de tiges végétales, tout en limitant les risques d'enroulement et d'enchevêtrement de fibres autour des moulins. En particulier, le dispositif selon la présente invention permet d'améliorer la fiabilité globale du dispositif, tout en conservant différents degrés de liberté en cas de corps étrangers ou de bourrage, et tout en permettant un accès et un entretien facilité.

## Revendications

1. Dispositif de traitement (2) de tiges végétales (1000) comportant, sur une portion d'extrémité (1004), des capsules de graines, notamment éclatées, et se déplaçant dans une première direction (D), sous forme d'une nappe continue s'étendant dans un plan avec un côté supérieur et un côté inférieur, le dispositif (2) comportant :
- un châssis (16),
- un moyen de déplacement (44) configuré pour maintenir les tiges végétales (1000) par une portion de maintien (1002) distinctes de ladite portion d'extrémité (1004), et pour les déplacer, sous forme de nappe continue, selon ladite première direction (D),
- un moulin (1) s'étendant selon un axe longitudinal (A) entre une extrémité avant (4) et une extrémité arrière (6), et
- un support fixe (100), de préférence longitudinal, disposé en regard du moulin (1),
de manière à ce que le moulin (1) et le support fixe (100) sont disposés de part et d'autre du plan de la nappe continue de tiges végétales (1000), le moulin (1) étant disposé d'un côté, de préférence du côté supérieur, du plan de la nappe continue et le support fixe (100) de l'autre côté, de préférence du côté inférieur, du plan de la nappe continue,
dans lequel l'axe longitudinal (A) du moulin est incliné par rapport à la première direction (D), de manière à venir balayer ladite portion d'extrémité (1004) des tiges végétales de la nappe continue,
et dans lequel l'extrémité avant (4) du moulin est positionnée en amont de l'extrémité arrière (6) dans le sens de déplacement de la nappe de tiges végétales, et l'extrémité avant (4) du moulin est une extrémité libre, **caractérisé en ce que** le support fixe (100) comprend une première portion (102) en regard de l'extrémité avant (4) du moulin, une deuxième portion (104) en regard de l'extrémité arrière (6) du moulin et une partie principale (106) s'étendant entre la première portion (102) et la deuxième portion (104), et **en ce que** la deuxième portion (104) du support fixe est une extrémité libre.

2. Dispositif de traitement (2) selon la revendication 1 dans lequel l'extrémité avant (4) du moulin est une extrémité arrondie, de préférence lisse, par exemple une extrémité convexe telle un cône, et dans lequel la première portion (102) du support fixe comprend une partie (108) inclinée vers le bas.

3. Dispositif de traitement (2) selon la revendication 1 ou 2, dans lequel le moulin (1) est monté sur le châssis (16) du dispositif de traitement (2) par son extrémité arrière (6) et dans lequel le support fixe (100) est monté sur le châssis (16) du dispositif de traitement (1) par la première portion (102).

4. Dispositif de traitement (2) selon l'une quelconque des revendications précédentes, dans lequel la partie principale (106) du support fixe (100) comprend au moins un élément longitudinal s'étendant selon un axe longitudinal parallèle à celui du moulin (1), l'axe longitudinal (A) du moulin et l'axe longitudinal de la partie principale (106) du support fixe (100) s'étendant un plan vertical ou incliné entre 0° et 90° par rapport à un plan vertical, de préférence entre 10° et 60°, et plus préférentiellement entre 25° et 35°.

5. Dispositif de traitement (2) selon l'une quelconque des revendications précédentes, dans lequel la partie principale (106) comporte : une partie cylindrique supérieure (112), par exemple à base ronde, triangle ou carrée, destinée à venir en contact avec la nappe continue, et un renfort longitudinal inférieur (114), par exemple une lame verticale, s'étendant le long de la partie cylindrique supérieure (112) et solidaire de la partie cylindrique supérieure (112) de manière à limiter l'enroulement de fibres autour du support fixe (100), et plus particulièrement autour de la partie cylindrique supérieure (112).

6. Dispositif de traitement (2) selon l'une quelconque des revendications précédentes, dans lequel la partie principale (106) du support fixe (100) comporte plusieurs éléments longitudinaux, par exemple deux, trois ou quatre, disposés parallèles entre eux, et de préférence à l'axe longitudinal (A) du moulin, ou bien disposés en segment circulaire avec une première portion commune.

7. Dispositif de traitement (2) selon l'une quelconque des revendications précédentes, dans lequel le support fixe (100) est monté sur le châssis (16) via une liaison pivot (110) verticale, ou inclinée entre la verticale et l'horizontale, éventuellement commandée, configurée pour modifier l'inclinaison horizontale, ou horizontale et verticale, de la partie principale (106) du support fixe (100) par rapport à la direction (D) de déplacement de la nappe continue ou par rapport à l'axe longitudinal (A) du moulin.

8. Dispositif de traitement (2) selon l'une quelconque des revendications précédentes, dans lequel le moulin (1) et le support fixe (100) sont configurés pour incliner la nappe continue de tiges de manière à ce que la portion d'extrémité (1004) portant les capsules soit plus basse que la portion de maintien (1002).

9. Dispositif de traitement (2) selon l'une quelconque des revendications précédentes, dans lequel la deuxième portion (104) du support fixe (100) est positionnée au-dessus d'un bord inférieur de l'extrémité arrière (6) du moulin.

10. Engin, automoteur ou tracté, comportant un système d'écapsulage comprenant un dispositif de traitement (2) de tiges végétales selon l'une quelconque des revendications précédentes, pour balayer la surface des tiges végétales comportant des capsules de graines, notamment éclatées.
